# DEMANDE DE BREVET EUROPEEN

(11) **EP 1 083 467 A1**
(43) Date de publication de la demande: **14.03.2001**
(21) Numéro de dépôt: 00203072.4
(22) Date de dépôt: 06.09.2000
(51) Int. Cl.: G04C 10/00, H01M 2/10

(54) **Dispositif assurant une liaison électrique entre une source d'énergie électrique et un circuit électronique d'une pièce d'horlogerie**

(30) Priorité: 07.09.1999 EP 99117614
(71) Demandeur: Eta SA Fabriques d'Ebauches, 2540 Grenchen (CH)
(72) Inventeur: Kröner, Wolfgang, 75180 Pforzheim (DE); Kaiser, Markus, 4500 Solothurn (CH); Schneider, Renato, 2560 Nidau (CH)
(74) Mandataire: Ravenel, Thierry Gérard Louis

(57) **Abrégé**

Il est décrit un dispositif électronique pour pièce d'horlogerie de type électronique ou électromécanique comprenant une source d'énergie électrique (4), telle qu'une pile, un circuit électronique (3) et une languette de liaison électrique (5) assurant une liaison électrique entre la source d'énergie électrique et le circuit électronique. La languette de liaison électrique (5) présente des première et seconde ouvertures (55, 56) collaborant avec une paire d'ergots de fixation (25, 26) solidaires d'un support (2) dudit dispositif, et comprend en outre, formée entre lesdites ouvertures (55, 56), une section (57) adaptée pour se déformer de manière élastique afin de modifier l'écartement des ouvertures (55, 56) et permettre l'engagement et le maintien de la languette de liaison électrique (5) sur les ergots de fixation (25, 26).

## Description

La présente invention concerne un dispositif électronique pour pièce d'horlogerie de type électronique ou électromécanique comprenant une source d'énergie électrique, un circuit électronique et au moins une languette de liaison électrique assurant une liaison électrique entre ladite source d'énergie électrique et ledit circuit électronique. La présente invention concerne également une languette de liaison électrique destinée à être montée sur une platine d'une pièce d'horlogerie électronique ou électromécanique afin d'assurer une liaison électrique entre une source d'énergie électrique et un circuit électronique de la pièce d'horlogerie.

Les pièces d'horlogerie électromécaniques ou électroniques comportent ordinairement un résonateur, par exemple à quartz, dont les oscillations sont entretenues par un circuit électronique de commande alimenté par une source d'énergie électrique telle qu'une pile de type pile-bouton. Les pièces d'horlogerie électromécaniques comportent en outre un mouvement horométrique piloté par le circuit électronique de commande associé au résonateur. La pile alimente ainsi le circuit électronique qui entretient les oscillations du résonateur et, le cas échéant, fournit les impulsions motrices à un moteur du mouvement horométrique. Afin de relier cette pile au circuit électronique de commande, on prévoit des moyens de liaison électrique qui forment un chemin d'alimentation.

Ces moyens de liaison électrique formant le chemin d'alimentation comprennent généralement deux languettes de liaison électrique respectivement frontale et latérale, la première étant disposée pour venir en contact sur une première borne (par ex. la borne négative) de la pile, tandis que la seconde est maintenue en appui sur la seconde borne (par ex. la borne positive) de la pile.

Typiquement, ces languettes de liaison électrique sont fixées à une platine par des moyens de fixation conventionnels, par exemple par rivetage ou au moyen de vis. Ceci présente l'inconvénient de rendre relativement compliqué l'assemblage de l'ensemble, en particulier lors d'un assemblage automatisé. Ce type de moyens de fixation rend en outre difficile le remplacement ultérieur éventuel d'une telle languette dans la pièce d'horlogerie.

Par ailleurs, l'utilisation de moyens de fixation constitués de vis, particulièrement sur une platine en matière plastique, peut causer des problèmes d'usure venant s'ajouter aux inconvénients déjà mentionnés.

La présente invention a ainsi pour but de pallier aux inconvénients susmentionnés en proposant un dispositif comportant des moyens de liaison électrique dont la structure ainsi que la fixation sont simplifiées.

Afin de répondre à ce but, on notera qu'il a déjà été proposé dans le brevet JP 2671838 des moyens de liaison électrique pour une pièce d'horlogerie électronique ne nécessitant pas de moyens de fixation complexes. Les moyens de liaison électrique décrits dans ce brevet comprennent une languette de liaison électrique guidée au moyen d'une paire d'ergots collaborant avec une paire d'ouvertures ménagées dans la languette. Cette languette de liaison électrique n'est toutefois maintenue en place que sous l'action combinée de la pile et du circuit électronique. Sans cette action, la languette est susceptible de se désengager des ergots, ce qui peut notamment constituer un problème lors de l'assemblage de cette languette ou lors du changement de la pile.

La présente invention a donc en outre pour but de proposer un dispositif comportant des moyens de liaison électrique ne nécessitant pas des moyens de fixation complexes, tels des vis ou des rivets, et dont la fixation dans la pièce d'horlogerie est néanmoins assurée de manière adéquate et sûre.

La présente invention a en outre pour but de faciliter le montage et, le cas échéant, le remplacement ultérieur des moyens de liaison électrique dans la pièce d'horlogerie.

A cet effet, la présente invention a pour objet un dispositif électronique pour pièce d'horlogerie de type électronique ou électromécanique dont les caractéristiques sont énumérées à la revendication 1.

D'autres caractéristiques de la présente invention font l'objet des revendications dépendantes.

La solution préconisée par la présente invention permet ainsi de faciliter la réalisation et le montage des moyens de liaison électrique dans une pièce d'horlogerie tout en assurant que ceux-ci y sont correctement fixés.

La présente invention a également pour objet une pièce d'horlogerie de type électronique ou électromécanique comportant un tel dispositif, ainsi qu'une languette de liaison électrique destinée à être montée dans une pièce d'horlogerie électronique ou électromécanique dont les caractéristiques sont énumérées à la revendication 6.

D'autres caractéristiques et avantages de la présente invention apparaîtront à la lecture de la description qui va suivre, faite en se référant aux dessins annexés, donnés uniquement à titre d'exemple, et dans lesquels:

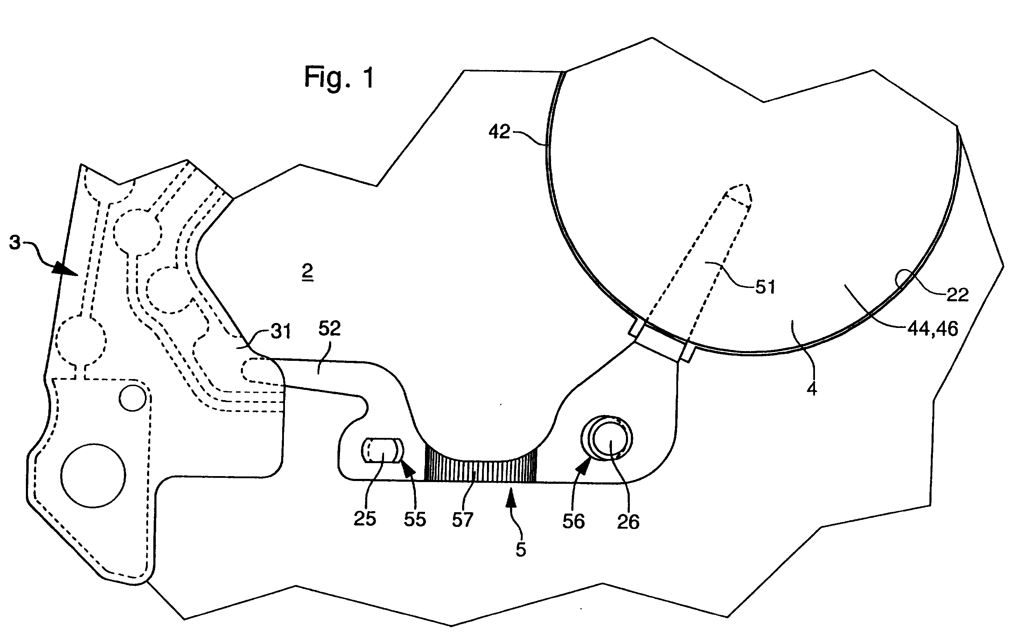

- la figure 1 est une vue en plan d'une portion d'une pièce d'horlogerie comportant une platine, un circuit électronique, une source d'énergie et des moyens de liaison électrique comprenant une languette de liaison électrique selon la présente invention; et
- la figure 2 est une vue en coupe de la portion de la pièce d'horlogerie de la figure 1 illustrant les moyens de liaison électrique selon la présente invention.

En se référant aux figures annexées, il est représenté une pièce d'horlogerie comportant une platine 2 formant support, réalisée avantageusement en un matériau synthétique tel que du plastique injecté. La pièce d'horlogerie comporte par ailleurs un circuit électronique 3 auquel est associé un résonateur par exemple à quartz (non représenté).

Dans le cas d'une pièce d'horlogerie électromécanique, cette dernière comporte en outre un mouvement horométrique pourvu d'un moteur, tel un moteur pas à pas, commandé par des impulsions motrices émanant du circuit électronique 3. Ces éléments, ne faisant pas l'objet de la présente invention, n'ont pas été représentés sur les figures.

Afin d'assurer l'alimentation du circuit électronique 3 et, le cas échéant, du moteur, la pièce d'horlogerie est en outre équipée d'une source d'énergie, formée dans cet exemple, par une pile 4 du type pile-bouton. Cette pile 4 permet de fournir l'énergie électrique nécessaire au fonctionnement du circuit électronique 3 qui entretient l'oscillation du résonateur à quartz et, le cas échéant, l'alimentation du moteur du mouvement horométrique.

Ce type de pile, telle que la pile-bouton 4, est d'un type largement commercialisé et est d'utilisation extrêmement courante dans des pièces d'horlogerie électroniques et électromécaniques. Cette pile 4 est de forme essentiellement cylindrique et présente un bord ou pourtour 42 qui a une forme de portion de cylindre, délimité de part et d'autre par deux régions sensiblement planes de plus grandes surfaces, respectivement 44 et 46. Une de ces régions, dans cet exemple la région 46 orientée vers la platine 2, ainsi que le pourtour cylindrique 42 constituent respectivement les bornes négative (-) et positive (+) de la pile 4. La pile 4 est disposée dans une cavité 22 ménagée dans la platine 2, la borne négative de la pile 4, soit la région 46, étant orientée vers le fond de cette cavité 22.

Afin d'assurer l'alimentation du circuit électronique 3, la pièce d'horlogerie comporte des moyens de liaison électrique formant un chemin d'alimentation. Ces moyens de liaison électrique comprennent d'une part une languette frontale de liaison électrique 5 supportée par la platine 2 et formant la partie négative du chemin d'alimentation. Une première partie terminale 51 de cette languette de liaison électrique 5 assure un contact avec la borne négative 46 de la pile 4. Une deuxième partie terminale 52 de la languette de liaison électrique 5 assure un contact électrique avec une piste d'alimentation 31 du circuit électronique 3.

Les moyens de liaison électrique comprennent d'autre part une languette latérale de liaison électrique, non représentée, formant la partie positive du chemin d'alimentation. Cette partie peut être réalisée de manière classique et est à la portée de l'homme du métier. On mentionnera toutefois que cette languette latérale de liaison électrique peut également être réalisée selon l'enseignement de la présente invention.

Les languettes de liaison électrique peuvent avantageusement être réalisées sous la forme de plaques de métal étampées, par exemple à partir d'une plaque en acier ressort.

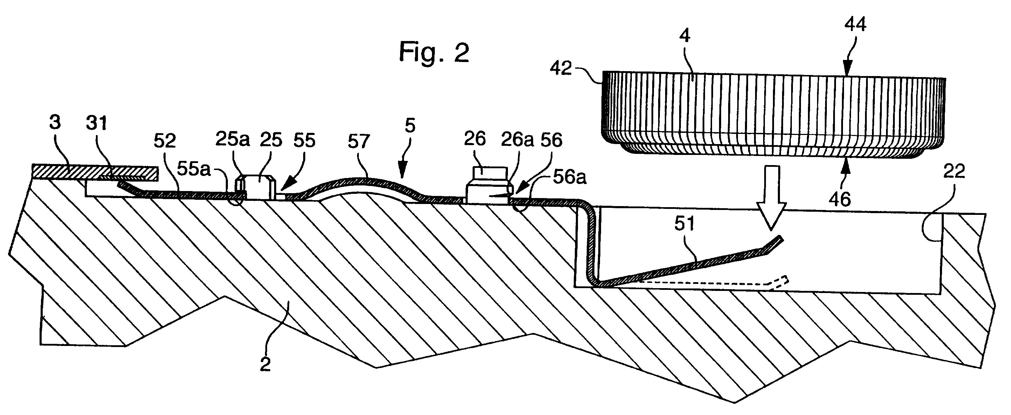

Les parties terminales 51 et 52 de la languette de liaison électrique 5 sont adaptées pour se déformer de manière élastique sous l'effet du circuit électronique 3 et de la pile 4 de sorte que ces parties terminales 51 et 52 soient maintenues en contact contre la borne négative 46 de la pile 4 et la piste d'alimentation 31 du circuit électronique 3 après montage. Sur la figure 2, qui présente une vue en coupe d'une portion de la pièce d'horlogerie, est ainsi représentée à titre illustratif, la position de la partie terminale 51 de la languette frontale de liaison électrique 5 dans sa position de repos lorsque la pile 4 n'est pas montés dans la pièce d'horlogerie.

Selon la présente invention, la languette frontale de liaison électrique 5 comporte en outre une paire d'ouvertures 55 et 56 séparées par une section 57 adaptée pour se déformer de manière élastique et formant en partie des moyens de fixation de la languette 5 sur la platine 2. Cette section présente préférablement un profil sensiblement en arc de cercle. Les moyens de fixation comportent en outre une paire d'ergots de fixation 25 et 26 solidaires de la platine 2 de manière à maintenir la languette frontale de liaison électrique 5 en place dans la pièce d'horlogerie.

Au repos, l'écartement des ouvertures 55 et 56 est choisi plus faible ou alternativement plus grand que l'écartement correspondant des ergots de fixation 25 et 26. Un plus faible écartement des ouvertures 55 et 56 par rapport à celui des ergots 25 et 26 implique que la section 57, une fois la languette montée sur la platine, exerce une force de rappel tendant à rapprocher les ouvertures 55 et 56. En conséquence, les faces des ouvertures 55 et 56 se situant vers l'extérieur par rapport à la section 57 viennent prendre appui contre les faces extérieures correspondantes des ergots de fixation 25 et 26.

A l'opposé, en choisissant un plus grand écartement des ouvertures 55 et 56 par rapport à celui des ergots 25 et 26, la section 57, une fois la languette montée sur la platine, exerce une force de rappel tendant à éloigner les ouvertures 55 et 56. En conséquence, les faces intérieures des ouverture 55 et 56 viennent prendre appui contre les ergots de fixation 25 et 26. Quelque soit la variante utilisée, la section 57 assure ainsi l'engagement et le maintien de la languette de liaison électrique 5 sur les ergots de fixation 25 et 26. La languette de liaison électrique 5 est donc maintenue en place sans contribution d'une action complémentaire tel qu'une pression exercée par le circuit électronique 3 ou la pile 2.

Préférablement, ces ergots de fixation 25 et 26 présentent une forme sensiblement cylindrique et comportent, dans leur partie inférieure, respectivement des renfoncements radiaux 25a et 26a dans lesquels viennent s'engager des faces 55a et 56a, respectivement, des ouvertures correspondantes 55 et 56 de la languette 5, l'élasticité de la section 57 assurant l'engagement des faces 55a et 56a des ouvertures 55 et 56 dans les renfoncements respectifs 25a et 26a des ergots de fixation 25 et 26. Cette solution permet avantageusement d'éviter un désengagement accidentel de la languette de liaison électrique.

Une pression sur la section déformable 57 de la languette 5, ici dans une direction sensiblement perpendiculaire au plan sur lequel repose la languette, provoque un écartement des ouvertures 55 et 56, permettant le désengagement des faces intérieurs 55a et 56a par rapport aux ergots de fixation 25 et 26.

Dans l'exemple illustré à la figure 2, on comprendra que la section 57 peut simplement être agencée de manière à permettre l'engagement de la languette 5 sur les ergots de fixation 25, 26, le maintien de la languette étant essentiellement assuré par les renfoncement radiaux 25a, 26a ménagés dans les ergots de fixation. Dans cet exemple, la section 57 contribue ainsi au maintien de la languette en forçant les faces 55a, 56a des ouvertures à s'insérer dans les renfoncements radiaux 25a, 26a.

De multiples modifications et/ou améliorations peuvent être apportées à la languette de liaison électrique selon la présente invention sans sortir du cadre et de l'esprit de celle-ci. On comprendra notamment que la présente invention n'est pas seulement limitée à la réalisation d'une languette frontale de liaison électrique tel que cela a été décrit plus haut, mais peut également aisément être appliquée à la réalisation d'une languette latérale de liaison électrique venant en contact avec la borne positive de la pile.

## Revendications

1. Dispositif électronique pour pièce d'horlogerie de type électronique ou électromécanique comprenant une source d'énergie électrique (4), un circuit électronique (3) et au moins une languette de liaison électrique (5) assurant une liaison électrique entre ladite source d'énergie électrique (4) et ledit circuit électronique (3), cette languette présentant des première et seconde ouvertures (55, 56) collaborant avec une paire d'ergots de fixation (25, 26) solidaires d'un support (2) dudit dispositif,
caractérisé en ce que ladite languette de liaison électrique (5) comprend en outre, formée entre lesdites ouvertures (55, 56), une section (57) adaptée pour se déformer de manière élastique afin de modifier l'écartement desdites ouvertures (55, 56) et permettre l'engagement et le maintien de ladite languette de liaison électrique (5) sur lesdits ergots de fixation (25, 26).

2. Dispositif selon la revendication 1, caractérisé en ce qu'au moins un desdits ergots de fixation (25, 26) comporte, dans sa partie inférieure, un renfoncement radial (25a; 26a) dans lequel vient s'engager une face (55a; 56a) de l'ouverture correspondante (55; 56) de la languette de liaison électrique (5), la partie supérieure de cet ergot de fixation (25; 26) empêchant un désengagement accidentel de la languette de liaison électrique (5).

3. Dispositif selon la revendication 1 ou 2, caractérisé en ce que ladite section (57) présente un profil sensiblement en arc de cercle.

4. Dispositif selon la revendication 1, caractérisé en ce que ledit support (2) est réalisé en matériau plastique et ladite languette de liaison électrique (5) est réalisée en acier ressort.

5. Pièce d'horlogerie de type électronique ou électromécanique comportant un dispositif électronique selon la revendication 1.

6. Languette de liaison électrique (5) destinée à être montée sur une platine (2) d'une pièce d'horlogerie électronique ou électromécanique afin d'assurer une liaison électrique entre une source d'énergie électrique (4) et un circuit électronique (3) de ladite pièce d'horlogerie, cette languette de liaison électrique (5) présentant des première et seconde ouvertures (55, 56) destinées à collaborer avec une paire d'ergots de fixation (25, 26) solidaires de la platine (2) de la pièce d'horlogerie,
caractérisée en ce que ladite languette de liaison électrique (5) comprend en outre, formée entre lesdites ouvertures (55, 56), une section (57) adaptée pour se déformer de manière élastique afin de modifier l'écartement desdites ouvertures (55, 56) et permettre l'engagement et le maintien de ladite languette de liaison électrique (5) sur lesdits ergots de fixation (25, 26).

7. Languette selon la revendication 6, caractérisée en ce que ladite section (57) présente un profil sensiblement en arc de cercle.

8. Languette selon la revendication 6 ou 7, caractérisée en ce que celle-ci est réalisée en acier ressort.
